# EUROPÄISCHE PATENTANMELDUNG

(11) **EP 1 901 213 A1**
(43) Veröffentlichungstag der Anmeldung: **19.03.2008**
(21) Anmeldenummer: 06018088.2
(22) Anmeldetag: 30.08.2006
(51) Int. Cl.: G06Q 10/00

(54) **Bestandsauswertung durch mechanische De.- bzw. Aktivierung eines Funksenders**

(30) Priorität: 06.07.2006 EP 06014006
(71) Anmelder: Intellion AG, 9016 St.Gallen (CH)
(72) Erfinder: Eisen, Stephan, CH- 8832 Wollerau (CH); Millarg, Kai, CH- 9000 St. Gallen (CH); Dierkes, Markus, CH- 9000 St. Gallen (CH)
(74) Vertreter: Lohmanns, Arno

(57) **Zusammenfassung**

Die Erfindung betrifft ein Verfahren zur Übertragung eines definierten Artikelbestands eines Lagerorts an eine Auswerteinheit. Dieses zeichnet sich dadurch aus, dass am Lagerort (2) eines Artikels (1) bei Erreichen des definierten Artikelbestands mechanisch eine Aktivierung oder Deaktivierung eines Sendens (4) eines kabellos zu übertragenden Signals ausgelöst wird, das Signal von einer Empfangseinheit (6) empfangen und der Auswerteinheit (7) ausgewertet wird und bei Registrierung der Aktivierung beziehungsweise Deaktivierung eine Benachrichtigung, beispielsweise ein Alarm, und/oder ein Befüll- bzw. Entleervorgang ausgelöst wird.

Die Erfindung betrifft ferner eine Vorrichtung zur Übertragung eines definierten Artikelbestands eines Lagerorts an eine Auswerteinheit. Diese zeichnet sich durch eine in der Nähe des Lagerorts des Artikels vorgesehene mechanische Auslöseeinrichtung, einen Sender (4) für ein kabellos zu übertragendes Signal, eine Empfangseinheit (6) zum Empfang des Signals und die Auswerteinheit (7) zur Auswertung des Signals aus, wobei Auslöseeinrichtung und Sender (4) derart zusammenwirken, dass eine Aktivierung oder Deaktivierung des Senders (4) bei Erreichen des definierten Artikelbestands des Artikels (1) ausgelöst wird; und wobei bei Registrierung der Aktivierung bzw. Deaktivierung durch die Auswerteinheit (7) eine Benachrichtigung, beispielsweise ein Alarm, und/oder ein Befüll- bzw. Entleervorgang ausgelöst wird.

## Beschreibung

Die Erfindung betrifft ein vergleichsweise einfaches und kostengünstiges Verfahren für die Übertragung eines definierten Artikelbestands an einem Lagerort, beispielsweise in einem Regal, einem Behältnis oder an einer Verkaufwand an eine zentrale Auswerteinheit.

Derzeit existieren nur sehr aufwändig zu realisierende, zumeist automatisierte Verfahren zur Messung des Bestandes an gelagerten Artikeln in Regalen, an Haken, auf Stellplätzen, in speziellen Ladungsträgern usw. Insbesondere bei vergleichsweise preiswerten Waren, die in sehr hohen Stückzahlen verkauft werden, kommen diese Verfahren aufgrund der geringen Gewinnspannen in der Regel nicht in Frage, so dass lediglich rein manuelle, stichprobenartige Überprüfungen der Bestände durch den Menschen, beispielsweise durch regelmäßige oder außerhalb der Geschäftsöffnungszeiten durchgeführte Sichtprüfung der Bestände durch Verkaufspersonal, Lieferanten usw., erfolgt. Diese Art der Überwachung ist sehr lückenhaft.

Die automatisierten Verfahren sind einerseits so gestaltet, dass sie entweder auf der direkten Identifizierbarkeit jedes einzelnen gelagerten Artikels oder auf der Erfassung der von den Artikeln bedeckten Fläche, beispielsweise im Regal, Behältnis oder an der Verkaufwand basieren. Eine Kombination der Identifizierbarkeit und der gleichzeitigen Bestandsmessung der Artikel ist zumeist nicht gegeben oder nur sehr aufwändig möglich.

Bei den bekannten Verfahren werden beispielsweise Kameras mit nachgeschalteter Bildverarbeitung zur -Auswertung eingesetzt. Dies weist den Nachteil auf, dass die Warenerkennung bisher unzuverlässig erfolgt und sich nur bei räumlich stark getrennten Artikeln verwenden lässt. Diese Art der Überwachung ist zudem problematisch, da es aufgrund einer möglichen Beobachtung von Kunden oder Personal zu einer Verletzung der Privatsphäre des Käufers bzw. des Personals kommen kann. Ferner sind "intelligente" Regalböden mit Waagen bekannt, wodurch ein Lager- bzw. Stellplatz mit einer Waage verknüpft wird, was aber sehr aufwändig und kostenintensiv ist (Stromversorgung, Verkabelung usw.). Des Weiteren ist es bekannt, die Artikel mit RFID-Transpondern zu versehen und den Warenbestand mit RFID Readern im Regalboden, ähnlich der Waage, auszulesen. Die Kosten eines derartigen Verfahrens übersteigen jedoch bei weitem den erzielbaren Nutzen. All diese aus dem Stand der Technik bekannten Verfahren weisen den Nachteil auf, dass die Montage teuer und aufwendig ist, dass die Flexibilität bezüglich Änderungen des Lagerorts sehr eingeschränkt ist, da die bestehenden Verfahren so ausgelegt sind, dass die notwendigen Vorrichtungen meist ein Teil des Lagerorts, beispielsweise des Regals bilden.

Vor dem Hintergrund der zuvor beschriebenen Nachteile, ist es daher Aufgabe der vorliegenden Erfindung, ein Verfahren sowie eine Vorrichtung zur Übertragung eines definierten Artikelbestands eines Lagerort an eine zentrale Auswerteinheit bereitzustellen, die jeweils vergleichsweise preiswert, zuverlässig und flexibel einzusetzen sind. Diese Aufgabe wird durch ein Verfahren des Anspruchs 1 bzw. eine Vorrichtung des nebengeordneten Anspruchs gelöst. Vorteilhafte Ausgestaltungen sind Gegenstand der abhängigen Ansprüche.

Das erfindungsgemäße Verfahren dient der Übertragung eines definierten Artikelbestands eines Lagerorts (eines Hakens, Bügels, Stellplatzes, Regals, Regalbodens usw.; im Allgemeinen auch Objekt bezeichnet) an eine Auswerteinheit. Es zeichnet sich dadurch aus, dass am Lagerort eines Artikels bei Erreichen eines definierten Artikelbestands, beispielsweise bei einem auf Null oder nahezu auf Null reduzierten Bestand oder einem vollständig aufgefüllten Lagerort, mittels einer mechanischen Auslöseeinrichtung ein Senden eines kabellos zu übertragenden Signals aktiviert oder deaktiviert wird. Der Begriff Artikelbestand kann sich auch auf einen einzelnen Artikel beziehen, so ist beispielsweise ein Kleiderbügel ein Lagerort für ein Kleidungsstück im Sinne der Erfindung. Aktivierung bzw. Deaktivierung im Sinne der Erfindung ist so zu verstehen, dass es bei der Erfindung in ihrer allgemeinen Form nicht zwingend zu einem Ein- bzw. Ausschaltvorgang im strengen Sinne kommen muss, sondern es kommt darauf an, dass das Senden gekoppelt an den definierten Artikelbestand unterbrochen oder aufgenommen wird.

Das Signal, beispielsweise ein Infrarotsignal, bevorzugt ein Funksignal, wird von einer Empfangseinheit empfangen und einer Auswerteinheit ausgewertet. Wird von letzterer eine Aktivierung bzw. Deaktivierung des Sendens registriert, werden eine Benachrichtigung, beispielsweise eine Füllstandsanzeige und/oder ein Alarm, und/oder ein Befüll- bzw. Entleervorgang ausgelöst. Der Befüll- bzw. Entleervorgang im Sinne der Erfindung ist so zu verstehen, dass damit der jeweils angestrebte Artikelbestand angestrebt wird. Ist beispielsweise der Artikelbestand Null oder nahezu Null soll die Benachrichtigung bzw. der Alarm für eine, beispielsweise manuelle, Befüllung sorgen oder es soll ein automatischer Befüllvorgang ausgelöst werden; ist dagegen die Kapazität des Lagerorts erreicht, soll ein Benachrichtigung für eine Entleerung oder ein Entleervorgang ausgelöst werden. Durch das erfindungsgemäße Verfahren wird aufgrund der kabellosen Übertragung in Zusammenwirkung mit der mechanischen Auslösung ein vergleichsweise einfaches und somit preiswertes Verfahren zur Überwachung eines Lagerorts bereitgestellt. Da mechanisch der Artikelbestand erfasst wird und nur in dieser Situation es zum Sendevorgang bzw. dessen Abschalten kommt, gestaltet sich die Überwachung vergleichsweise einfach und die Datenauswertung wird drastisch vereinfacht. Aufgrund des vergleichsweise einfachen Aufbaus ist das Verfahren leicht in vorhandene Lagersysteme (Objektsysteme), beispielsweise ganze Regale, zu integrieren. Die erfindungsgemäße mechanische Auslösung sowie die Artikelform sind in keiner Weise eingeschränkt. Beispielsweise umfasst die mechanische Auslöseeinrichtung einen mittels Feder oder Gewicht vorgespannten Auslösemechanismus, eine Schwimmerkonstruktion bei einem flüssigen Artikel, einen Mechanismus bei dem durch mechanische Drehung oder durch einen Beschleunigungsvorgang das Aktivieren bzw. Deaktivieren des Sendens ausgelöst wird. Denkbar sind auch gekoppelte Vorgänge aus einem mechanischen und chemischen Schritt, bei denen beispielsweise die Auslösung letztlich durch eine chemische Reaktion, beispielsweise die Wirkung eines Klebers, ausgelöst wird.

Bei einer weiteren vorteilhaften Ausführungsform weist das Signal eine dem Lagerort zugeordnete Kennung (ID) auf. Die Kennung wird durch die Auswerteinheit ausgewertet, indem beispielsweise der jeweiligen Kennung einem Lagerort und ferner der am Lagerort vorgesehenen Artikelart zugeordnet wird. Diese Zuordnung ist beispielsweise in einer zur Auswerteinheit gehörigen Datenbank hinterlegt. Dadurch kann bei mehreren Artikeln und zugehörigen Lagerorten leicht der Lagerort identifiziert werden, bei dem der definierte Artikelbestand erreicht ist. Ist die Kennung so dem Artikel zugeordnet, können die einzelnen Lagerorte beliebig verändert werden. Umbauten eines die Lagerorte aufnehmenden Regals sind so leicht möglich. Digitale und analoge Verfahren, um einem Signal eine Kennung aufzubringen, sind im Stand der Technik bekannt, und es obliegt dem Fachmann, ein für die entsprechenden Anwendungen und der aufzulösenden Mannigfaltigkeit der Artikeln entsprechendes Verfahren auszuwählen.

In einer weiteren vorteilhaften Ausführungsform wird das Aktivieren des Sendens durch Aufheben einer Abschirmung oder Aufheben einer Dämpfung der Sendeleistung des Senders ausgelöst. Alternativ wird bei einer Deaktivierung der Sender angeschirmt oder dessen Sendeleistung gedämpft. Beispielsweise wird die sendende Antenne des Senders mittels einer metallischen Abschirmung abgedeckt, die bei der Aktivierung durch mechanische Auslösung entfernt wird. In einer anderen Ausgestaltung wird der Sender durch ein Störfeld eines Magneten abgeschirmt und bei der mechanischen Aktivierung werden Magnet und Sender relativ zueinander auseinander bewegt, um das Senden auszulösen. Beispielsweise handelt es sich um eine Relativverschiebung zweier unabhängiger (UHF-)Antennen (Schwingkreise) des Funksenders zueinander, wobei die Funktionsfähigkeit des Funksenders erst erreicht wird, wenn die elektromagnetische Kopplung beider Antennen bzw. Schwingkreise durch die optimale Position (wieder) hergestellt ist.

Bei einer weiteren vorteilhaften Ausführungsform wird das Senden durch mechanisches Einschalten eines Senders ausgelöst. Beispielsweise ist der Sender mit einem Schalter ausgestaltet, auf den durch den Auslösevorgang mechanisch eingewirkt wird, um den Sendevorgang auszulösen, d.h. den Sender einzuschalten.

Bei einer weiteren vorteilhaften Ausführungsform wird das Signal von einem RFID-(Radio Frequency Identification)-Transponder erzeugt. Derartige Transponder sind in vielerlei Baugrößen und vor Allem preiswert erhältlich, wodurch das Verfahren in der Realisierung besonders preiswert ist. Es kann sich um einen aktiven oder passiven RFID-Transponder handeln. Ein passiver unterscheidet sich von einem aktiven RFID-Transponder dadurch, dass ersterer seine Sendeenergie aus einer elektromagnetischen Strahlung, bevorzugt der des Lesegeräts, bezieht. Bei einem aktiven RFID-Transponder weist dieser eine Energiequelle für das Senden auf, wobei aus Energiespargründen der Transponder zum Senden beispielsweise erst durch ein spezielles Signal des Lesegeräts aktiviert wird. Das erfindungsgemäße Verfahren ist nicht auf eine der beiden RFID-Transponderarten eingeschränkt. Die Frequenz des vom RFID-Transponder abgestrahlten Funksignals kann vom Fachmann entsprechend der zu erzielenden Reichweite des Transponders ausgewählt werden. Der Transponder kann zum Beispiel durch Auf- oder Einkleben, durch Aufdrucken von Funkantenne und Chip in der Nähe des Lagerorts angebracht werden.

Das erfindungsgemäße Verfahren ist aufgrund seiner Flexibilität und seines geringen bis gar keinem Verkabelaufwand besonders von Vorteil, wenn der Lagerort ein Kleiderbügel und der Artikel ein Kleidungsstück ist. Beispielsweise ist der Sender im Bereich des Hakens des Kleiderbügels angeordnet und durch eine Relativverschiebung des Hakens zum Kleiderbügel wird das Ein- bzw. Abschalten des Sendens ausgelöst. Dadurch können beispielsweise leere Kleiderbügel identifiziert werden.

Die Erfindung betrifft ferner eine Vorrichtung zur Übertragung eines definierten Artikelbestands eines Lagerorts an eine Auswerteinheit. Die Vorrichtung zeichnet sich dadurch aus, dass sie eine in der Nähe des Lagerorts des Artikels vorgesehene mechanische Auslöseeinrichtung, einen Sender für ein kabellos zu übertragendes Signal und eine Empfangs- und Auswerteinheit zum Empfang des Signals umfasst,

Dabei wirken die Auslöseeinrichtung und der Sender derart zusammen, dass eine Aktivierung oder Deaktivierung des Senders bei Erreichen des definierten Artikelbestands des Artikels ausgelöst wird. Bei Registrierung der Aktivierung bzw. Deaktivierung durch die Empfangs- und Auswerteinheit wird eine Benachrichtigung und/oder Befüll- bzw. Entleervorgang ausgelöst. Die Empfangs- und Auswerteinheit ist beispielsweise statisch in der Nähe des Lagerorts, beispielsweise des Regals, angebracht. Es kann sich ferner um eine mobile, d.h. tragbare Empfangs- und Auswerteinheit handeln. Die erfindungsgemäße Vorrichtung ermöglicht durch die kabellose Übertragung nicht nur ein flexibles Umpositionieren der Artikel, da die Funkverbindung zur Empfangs- und Auswerteinheit auch bei einer Ortsveränderung des Artikels bestehen bleibt. Ferner ergeben sich bei vielen verschiedenen, an jeweils verschiedenen Lagerorten zu überwachenden Artikeln hohe Zeit- und Kostenersparnisse. Die erfindungsgemäße Vorrichtung ist service- und wartungsfreundlich, da u.a. der Verkabelungsaufwand und/oder die Stromversorgung der Vorrichtung vergleichsweise gering ausfällt, wodurch nicht zuletzt Kosten und Aufwand, insbesondere bei der Installation und bei Umbauten, eingespart werden können.

Bei einer weiteren vorteilhaften Ausführungsform der erfindungsgemäßen Vorrichtung ist der Sender ein Funksender. Dadurch kann besonders einfach und preiswert eine kabellose Übertragung mit vergleichsweise großer Reichweite erreicht werden. Bevorzugt handelt es sich um einen Sender für ein durch eine Kennung identifizierbares Funksignal. Dadurch kann bei mehreren Artikeln und zugehörigen Lagerorten leicht der Artikel identifiziert werden, bei dem der definierte Artikelbestand erreicht ist. Ist die Kennung so dem Artikel, beispielsweise über eine in der Auswerteinheit hinterlegte Datenbank zugeordnet, können die einzelnen Lagerorte beliebig verändert werden. Umbauten eines die Lagerorte aufnehmenden Regals sind so leicht möglich. Digitale und analoge Verfahren, um einem Signal eine Kennung aufzubringen, sind im Stand der Technik bekannt, und es obliegt dem Fachmann, ein für die entsprechenden Anwendungen und der aufzulösenden Mannigfaltigkeit der Artikeln entsprechende Kennung auszuwählen. Zur Verbesserungen der Genauigkeit der Bestandsmessung kann bspw. die Erfassungsrate der Funk- und Auswerteinheit erhöht werden.

Gemäß einer weiteren vorteilhaften Ausführungsform der erfindungsgemäßen Vorrichtung ist der Sender ein RFID-Transponder. Wie oben bereits ausgeführt wurde, sind derartige Transponder in vielerlei Baugrößen und vor Allem preiswert erhältlich, wodurch die Vorrichtung in der Realisierung besonders preiswert ist. Es kann sich um einen aktiven oder passiven RFID-Transponder handeln.

Weitere Merkmale, Einzelheiten und Vorteile der Erfindung ergeben sich aus den Ansprüchen und den nachfolgenden Zeichnungen, in denen schematisch Ausführungsbeispiele der erfindungsgemäßen Vorrichtung dargestellt sind, ohne die Erfindung darauf einzuschränken.

Es zeigen:
Figur 1 eine erste Ausführungsform bei der das Ein- bzw. Abschalten des Sendens eines RFID-Transponders durch relative Verschiebung des Transponders aus bzw. in eine Abschirmung ausgelöst wird;
Figur 2 die Verwendung der Vorrichtung der Fig. 1 mit ihrem schematischen Zusammenwirken bei einem Kleiderbügel als Lagerort;
die Figuren 3a-3b schematische Darstellung, wie ein Auslösen des Ein- bzw. Abschalten des Sendens bewirkt werden kann.

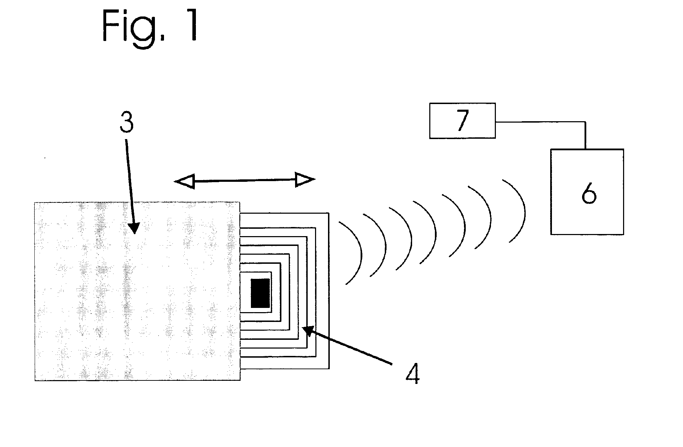

Figur 1 zeigt eine erste Ausführungsform der erfindungsgemäßen Vorrichtung, bei der das Aktivieren bzw. Deaktivieren des Sendens eines RFID-Transponders 4 mit Antenne und zugehörigem Chip durch relative Verschiebung des Transponders 4 aus bzw. in eine Abschirmung 3 ausgelöst wird. Die relative Verschiebung von Transponder 4 und Abschirmung 3 ist durch den Doppelpfeil veranschaulicht und wird im durch eine mechanische, nicht dargestellte Vorrichtung bewirkt, die bei Erreichen eines definierten Artikelbestands an einem Lagerort die gezeigte Verschiebung auslöst. Im Allgemeinen befindet sich der Transponder 4 und die Abschirmung in der Nähe des Lagerorts. Befindet sich der Transponder 4 außerhalb der Abschirmung 3 kann dessen Funksignal beispielsweise von einer Empfangseinheit 6 (Antenne) empfangen und mittels der Auswerteinheit 7 ausgewertet werden, um anhand des mit Kennung versehenen Funksignals eine Identifikation des Artikels zu gestatten, von dem gleichzeitig aufgrund des Aktivieren oder Deaktivieren des Funksignals bekannt ist, dass der definierte Artikelbestand erreicht ist.

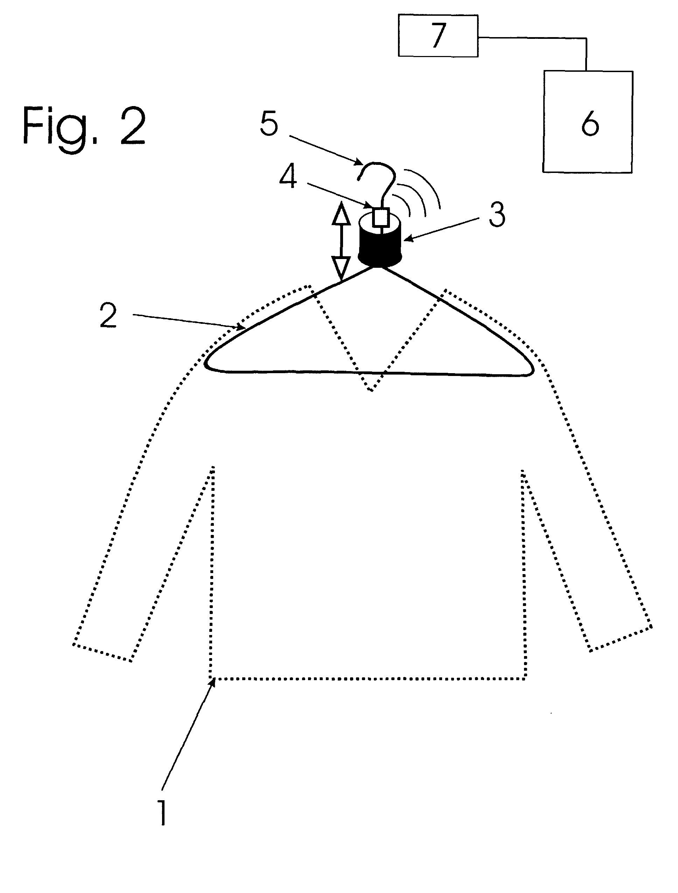

Figur 2 zeigt die Verwendung der in Figur 1 gezeigten Vorrichtung mit ihrem schematischen Zusammenwirken bei einem Kleiderbügel 2 als Lagerort. Der Artikel ist ein Kleidungsstück 1. Der RFID-Transponder 4 und die ihn umgebende, hülsenförmige Abschirmung 3 sind in der Nähe des Hakens 5 angebracht. Durch eine nicht dargestellte, austarierte Federmechanik wird bei Entfernen des Kleidungsstück der Transponder aus der Abschirmung bewegt, um so das Aktivieren des Sendens des Transponders zu bewirken, wenn das Kleidungstück 1 abgenommen wird. Dieses "Einschalten" wird von der Auswerteinheit registriert. Alternativ kann der Transponder in die Abschirmung bewegt wird, um dessen Senden zu deaktivieren. Dieses "Ausschalten wird von der Auswerteinheit erfasst.

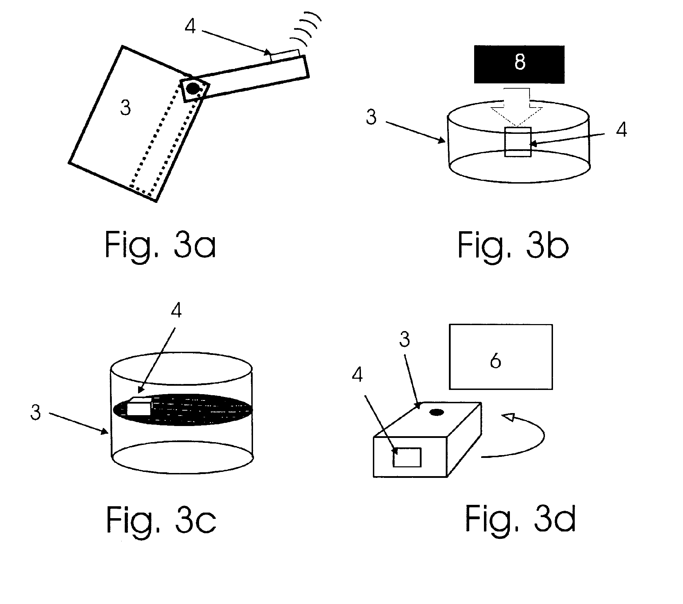

Die Figuren 3 bis 3d sind schematische Darstellungen, wie mechanisch eine Aktivierung bzw. Deaktivierung eines RFID-Transponders erfolgt. Figur 3a zeigt ein Verschwenken eines RFID-Transponders 4 aus einer abschirmten Stellung innerhalb einer Abschirmung 3 (gestrichelt dargestellt) ähnlich einer Klappmessermechanik in eine Sendestellung (mit durchgezogener Linie dargestellt). In Figur 3b wirkt bei Aktivierung ein Fallgewicht 8 auf einen Transponder 4 ein, um diesen aus der Abschirmung 3 zu bewegen und dessen Senden zu aktivieren. Figur 3c zeigt einen an einem Schwimmer befestigten oder ausgebildeten Transponder 4, wobei bei Erreichen eines definierten Füllstands der Schwimmer und damit der Transponder 4 sich außerhalb einer Abschirmung 3 befindet, wobei so das Senden aktiviert wird. In Figur 3d ist der Transponder 4 so angebracht, dass er in einer Deaktivierungsstellung der Auslöseeinrichtung bezüglich der Empfangseinheit 6 abgeschirmt ist. Bei Aktivierung wird der der Transponder 4 durch die Auslöseeinrichtung in Richtung der Empfangseinrichtung 6 verschwenkt (durch den halbkreisförmigen Pfeil angedeutet), um das Senden zu aktivieren.

## Patentansprüche

1. Verfahren zur Übertragung eines definierten Artikelbestands eines Lagerorts an eine Auswerteinheit, **dadurch gekennzeichnet, dass** am Lagerort (2) eines Artikels (1) bei Erreichen des definierten Artikelbestands mechanisch eine Aktivierung oder Deaktivierung eines Sendens (4) eines kabellos zu übertragenden Signals ausgelöst wird, das Signal von einer Empfangseinheit (6) empfangen und der Auswerteinheit (7) ausgewertet wird und bei Registrierung der Aktivierung beziehungsweise Deaktivierung eine Benachrichtigung, beispielsweise ein Alarm, und/oder ein Befüll- bzw. Entleervorgang ausgelöst wird.

2. Verfahren gemäß Anspruch 1, **dadurch gekennzeichnet, dass** das Signal eine dem Lagerort zugeordnete Kennung aufweist, die von der Auswerteinheit (7) ausgewertet wird.

3. Verfahren gemäß einem der vorhergehenden Ansprüche, **dadurch gekennzeichnet, dass** das Signal per Funk übertragen wird.

4. Verfahren gemäß einem der vorhergehenden Ansprüche, **dadurch gekennzeichnet, dass** das Aktivieren des Sendens durch Aufheben einer Abschirmung (3) oder Aufheben einer Dämpfung der Sendeleistung eines Senders (4) beziehungsweise das Deaktivieren durch einen umgekehrten Vorgang ausgelöst wird.

5. Verfahren gemäß einem der vorhergehenden Ansprüche, **dadurch gekennzeichnet, dass** das Aktivieren bzw. Deaktivieren des Sendens durch mechanisches Einschalten bzw. Abschalten eines Senders (4) ausgelöst wird.

6. Verfahren gemäß einem der vorhergehenden Ansprüche, **dadurch gekennzeichnet, dass** das Signal von einem RFID-Transponder (4) erzeugt wird.

7. Verfahren gemäß einem der vorhergehenden Ansprüche, **dadurch gekennzeichnet, dass** der Lagerort (2) ein Kleiderbügel und der Artikel (1) ein Kleidungsstück sind.

8. Vorrichtung zur Übertragung eines definierten Artikelbestands eines Lagerorts an eine Auswerteinheit, **gekennzeichnet durch** eine in der Nähe des Lagerorts des Artikels vorgesehene mechanische Auslöseeinrichtung, einen Sender (4) für ein kabellos zu übertragendes Signal, eine Empfangseinheit (6) zum Empfang des Signals und die Auswerteinheit (7) zur Auswertung des Signals, wobei Auslöseeinrichtung und Sender (4) derart zusammenwirken, dass eine Aktivierung oder Deaktivierung des Senders (4) bei Erreichen des definierten Artikelbestands des Artikels (1) ausgelöst wird; und wobei bei Registrierung der Aktivierung bzw. Deaktivierung **durch** die Auswerteinheit (7) eine Benachrichtigung, beispielsweise ein Alarm, und/oder ein Befüll- bzw. Entleervorgang ausgelöst wird.

9. Vorrichtung gemäß dem vorhergehenden Anspruch, **dadurch gekennzeichnet, dass** der Sender (4) ein Funksender ist, bevorzugt ein Sender (4) für ein durch eine Kennung identifizierbares Funksignal, ist.

10. Vorrichtung gemäß einem der vorhergehenden Ansprüche 8 bis 9, **dadurch gekennzeichnet, dass** der Sender (4) ein RFID-Transponder ist.

11. Verwendung der Vorrichtung gemäß einem der vorhergehenden Ansprüche 8 bis 10 in einem Warenwirtschaftssystem, bevorzugt bei der Lagerung und Verkaufsauslage von Konsumartikeln.
